# EUROPEAN PATENT SPECIFICATION

(11) **EP 3 424 164 B1**
(45) Date of publication and mention of the grant of the patent: **18.12.2019**
(21) Application number: 16723082.0
(22) Date of filing: 12.05.2016
(51) Int. Cl.: H04L 1/00, H04L 1/20, H04W 4/06, H04W 4/10

(54) **MBMS BEARER QUALITY EVALUATION**
QUALITÄTSBEWERTUNG VON MBMS-TRÄGER
ÉVALUATION DE QUALITÉ D'UN SUPPORT MBMS

(43) Date of publication of application: 09.01.2019
(73) Proprietor: Telefonaktiebolaget LM Ericsson (PUBL), 164 83 Stockholm (SE)
(72) Inventor: TRÄNK, Magnus, 443 92 Lerum (SE); ÅKESSON, Joakim, 438 32 Landvetter (SE)
(74) Representative: Ericsson
(86) International application number: PCT/EP2016/060668
(87) International publication number: WO 2017/194114

(56) References cited:
- EP-A1- 1 255 368
- EP-A1- 2 528 270
- CA-A1- 2 947 953
- US-A1- 2014 016 491
- Ralf Kreher: "CORRELATION OF BLER AND OTHER MEASUREMENTS" In: "UMTS Performance Measurement", 11 July 2006 (2006-07-11), John Wiley & Sons, Incorporated, XP055340514, ISBN: 978-0-470-03249-7 pages 69-71, page BIBL/DESC 1, lines 24-44 page 2, lines 1-4

## Description

### TECHNICAL FIELD

Embodiments presented herein relate to a method, a wireless device, a computer program, and a computer program product for quality evaluation of an MBMS bearer.

### BACKGROUND

In communications networks, there may be a challenge to obtain good performance and capacity for a given communications protocol, its parameters and the physical environment in which the communications network is deployed.

An example of applications available in some communications system is group communications services. In general terms, group communication means that the same information or media is delivered to multiple client nodes.

In group communication systems the client nodes receiving the same media constitute a group of client nodes. These client nodes may be located at different locations. If many client nodes are located within the same area, multicast or broadcast based transmission using e.g., Multicast-Broadcast Multimedia Services (MBMS) is efficient for communications to the group of client nodes, because communications resources such as time and frequency resources are shared among client nodes.

A typical application of a group communication system is a Push-to-Talk (PTT) system. In a PTT system there are wireless devices hosting clients and a control node (or server) that receives and distributes PTT calls from and to the clients. When a client in an uplink (i.e., from client to control node) transmits media in a PTT call it uses a unicast bearer from the client to the network. The control node may use MBMS bearers or unicast bearers to transmit media downlink (i.e. from the control node to the clients).

In a 3rd Generation Partnership Project (3GPP) network each unicast bearer utilizes a radio bearer that is dynamic in terms of, for example, modulation, coding and retransmission mechanisms. This is achieved by feedback messages from the wireless device that can report measured channel quality, erroneous transport blocks, etc. This allows the unicast bearers to be highly flexible so as to handle dynamic radio conditions.

When using MBMS bearers in a PTT system the control node needs to rely on the quality of the MBMS bearer, since there is typically no feedback of the reception quality of the MBMS bearer. In this respect, application layer mechanism to handle reception reporting and repair functionality exists in 3GPP, but that will for a group communication system such as a PTT system introduce latency beyond practical limits.

Reception of media over an MBMS bearer can be performed even when the wireless device is in Idle mode. When a the wireless device experiences poor MBMS reception quality, wireless device client needs to inform the control node about the reception quality by entering Connected mode and then sending a reception quality message, whereby the control node may take action to change transmission mode to use unicast bearer for the specific client hosted by the wireless device sending the reception quality message.

MBMS can be used with two different transmission modes. One of the modes is known as MBMS Single Frequency Network (MBSFN), which means that the same signal is synchronously transmitted on the same frequency from radio access network nodes in several radio cells, which gives an improved Signal Interference and Noise Ratio (SINR) due to multiple transmissions being added to a combined signal power for the wireless device.

A second transmission mode is known as Single Cell Point to Multipoint (SC-PTM). SC-PTM was introduced in 3GPP E-UTRAN Rel-13. In this transmission mode only one radio access network node transmits the data. This transmission mode does not provide the benefit of improved SINR due to contributions from neighboring radio access network nodes as in MBSFN.

However, SC-PTM can be used with finer geographical granularity since SC-PTM will be used only in cells where the wireless devices are located.

When using MBMS bearers the client needs to evaluate the quality of the MBMS bearers both during a PTT call at media transmission as well as when no media is transmitted. Known mechanisms to measure the quality of an MBMS bearer are limited to measurement of MBSFN Reference Signal Received Quality (RSRQ), which is defined in 3GPP TS 36.214 V13.1.0. When media is broadcasted over an MBMS bearer the reception quality can be evaluated by analyzing the Transport Block Error Rate (BLER).

The traffic pattern in PTT systems commonly comprises a few short transmission bursts of media within a short interval. These transmission bursts are commonly followed by a long period of silence (i.e. where no media is transmitted). Due to the unpredictable rate of PTT media transmissions it is difficult to evaluate the MBMS bearer reception quality. When no media is broadcasted it is difficult to evaluate the expected quality.

CA 2947953 A1 relates to MBSFN bearer quality measurements and discusses the problem of MBMS services varying between fairly constant streaming flows and intermittent traffic. Reported measurement results may include non-MBMS subframes/cell measurements to enable the network to fill in potential measurement reporting gaps.

However, there is still a need for improved mechanisms for evaluating the quality of an MBMS bearer.

### SUMMARY

An object of embodiments herein is to provide efficient quality evaluation of an MBMS bearer.

According to a first aspect there is presented a method for quality evaluation of an MBMS bearer. The method is performed by a wireless device. The method comprises determining a measurement of signal quality of a reference signal separate from the MBMS bearer, the reference signal being received from at least one radio access network node to obtain a quality measure for the MBMS bearer. The method comprises estimating an expected BLER of the MBMS bearer from the measurement and from a modulation and coding scheme (MCS) used for a Multicast Channel (MCH) of the MBMS bearer.

Advantageously this provides efficient quality evaluation of the MBMS bearer.

Advantageously this provides efficient evaluation of the expected BLER on an MBMS bearer, even when no data is sent on the MBMS bearer. Furthermore the expected BLER may be compared with alternative transmission options for the purpose of reporting and/or mobility decisions.

According to a second aspect there is presented a wireless device for quality evaluation of an MBMS bearer. The wireless device comprises a determine module configured to determine a measurement of signal quality of a reference signal separate from the MBMS bearer, the reference signal being received from at least one radio access network node to obtain a quality measure for the MBMS bearer. The wireless device comprises an estimate module configured to estimate an expected BLER of the MBMS bearer from the measurement and from an MCS used for an MCH of the MBMS bearer.

According to a third aspect there is presented a computer program for quality evaluation of an MBMS bearer, the computer program comprising computer program code which, when run on a wireless device, causes the wireless device to perform a method according to the first aspect.

According to a fourth aspect there is presented a computer program product comprising a computer program according to the fifth aspect and a computer readable storage medium on which the computer program is stored.

It is to be noted that any feature of the first, second, third, and fourth aspects may be applied to any other aspect, wherever appropriate. Likewise, any advantage of the first aspect may equally apply to the second, third, and/or fourth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2 and 3 are flowcharts of methods according to embodiments;
Fig. 4 is a signalling diagram according to embodiments;
Fig. 5 is a schematic diagram showing functional units of a wireless device according to an embodiment;
Fig. 6 is a schematic diagram showing functional modules of a wireless device name according to an embodiment; and
Fig. 7 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

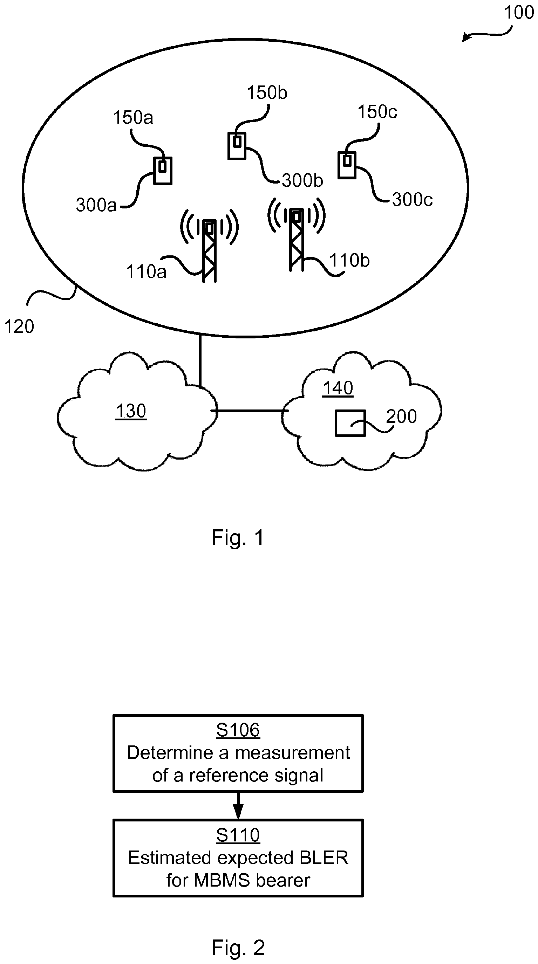

Fig. 1 is a schematic diagram illustrating a communications system 100 where embodiments presented herein can be applied. The communications system 100 is assumed to provide services for group communication and may hence be regarded as a group communications system. The group communications system 100 is, according to some aspects, a push to talk (PTT) system.

The communications system 100 comprises a radio access network 120, a core network 130, and a service network 140. The communications system 100 further comprises at least one control node 200 and at least one client node 150a, 150b, 150C. The at least one control node 200 may be provided in, or installed on, at least one radio access network (RAN) node 110a, 110b or in another entity or device in the radio access network 120, in an entity or device of the core network 130, or in an entity or device of the service network 140. The at least one control node 200 could implement the functionality of a group communication application server (GCS AS). Each client node 150a, 150b, 150c may be provided in, or installed on, a respective wireless device 300a, 300b, 300c.

The radio access network 120 is operatively connected to the core network 130 which in turn is operatively connected to the service network 140. The at least one radio access network node 110a, 110b thereby enables the wireless devices 300a, 300b, 300c, and hence the client nodes 150a, 150b, 150c, to access services and exchange data as provided by the service network 140.

Examples of wireless devices 300a, 300b, 300c include, but are not limited to, mobile stations, mobile phones, handsets, wireless local loop phones, user equipment (UE), smartphones, laptop computers, and tablet computers. Examples of radio access network nodes 110a, 110b include, but are not limited to, radio base stations, base transceiver stations, node Bs, evolved node Bs, and access points. As the skilled person understands, the communications system 100 may comprise a plurality of radio access network nodes 110a, 110b, each providing network access to a plurality of wireless devices 300a, 300b, 300c. The herein disclosed embodiments are not limited to any particular number of radio access network nodes 110a, 110b, client nodes 150a, 150b, 150c, or wireless devices 300a, 300b, 300c.

As noted above, there is still a need for improved mechanisms for evaluating the quality of an MBMS bearer.

The embodiments disclosed herein relate to mechanisms for quality evaluation of an MBMS bearer. In order to obtain such mechanisms there is provided a wireless device 300a, 300b, 300c, a method performed by the wireless device 300a, 300b, 300c, a computer program product comprising code, for example in the form of a computer program, that when run on a wireless device 300a, 300b, 300c, causes the wireless device 300a, 300b, 300c to perform the method.

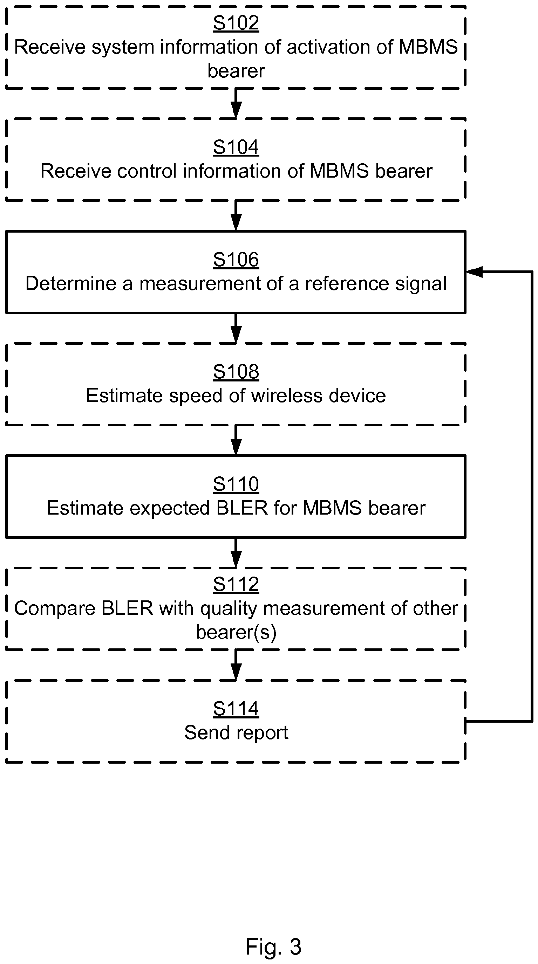

Figs. 2 and 3 are flow charts illustrating embodiments of methods for quality evaluation of an MBMS bearer. The methods are performed by the wireless device 300a, 300b, 300c. The methods are advantageously provided as computer programs 420.

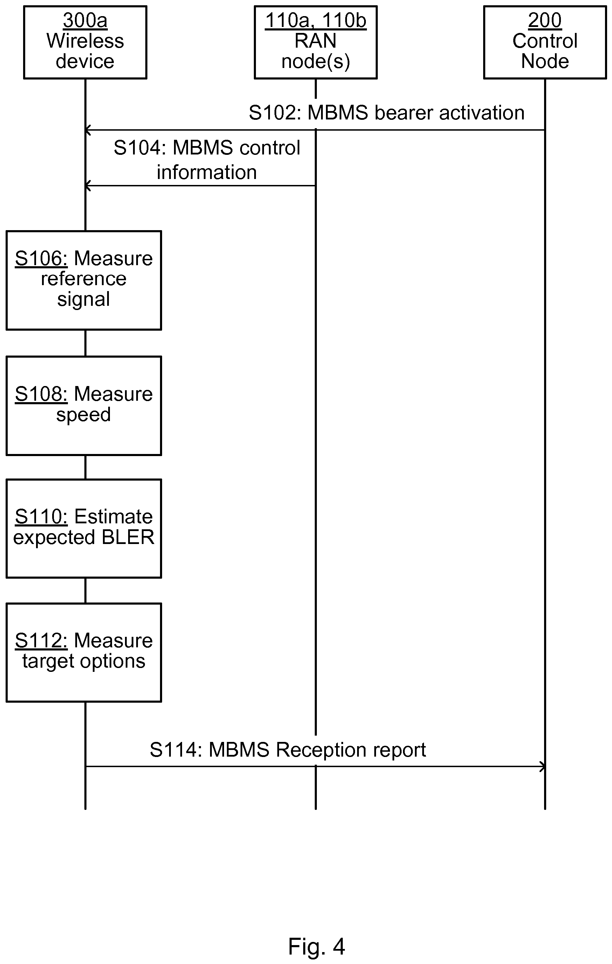

Reference is now made to Fig. 2 illustrating a method for quality evaluation of an MBMS bearer as performed by the wireless device 300a, 300b, 300c according to an embodiment. Parallel reference is also made to the signalling diagram of Fig. 4.

The herein disclosed embodiments are based on using a quality measure for the MBMS bearer together with the modulation and coding scheme (MCS) that is used for the MBMS bearer to evaluate the expected BLER as if data would be sent on the MBMS bearer.

S106: The wireless device 300a, 300b, 300c determines a measurement of signal quality of a reference signal separate from the MBMS bearer to obtain a quality measure for the MBMS bearer. The reference signal is received from at least one radio access network node 110a, 110b. Examples of quality measures will be provided below.

S110: The wireless device 300a, 300b, 300c estimates the expected block error rate (BLER) of the MBMS bearer from the measurement and, from the MCS used for a Multicast Channel (MCH) the MBMS bearer.

BLER of a given transmission is herein defined as the number of erroneous received blocks divided by the total number of received blocks in the given transmission.

The BLER can be estimated as if data were sent on the MBMS bearer. A wireless device 300a, 300b, 300c measuring a high quality measure and listening to a MBMS bearer with a robust MCS can expect a low BLER when data is sent on the MBMS bearer. The MCS is static for one MBMS bearer in one MBSFN and this means that based on a certain MCS, the wireless device 300a, 300b, 300c can tolerate a certain minimum level of the quality measure before the BLER gets too high and the wireless device 300a, 300b, 300c must take appropriate actions. Examples of such appropriate actions will be provided below.

Embodiments relating to further details of quality evaluation of an MBMS bearer as performed by the wireless device 300a, 300b, 300c will now be disclosed.

There can be different examples of quality measures. According to an embodiment the quality measure is the RSRQ for the MBMS bearer. The RSRQ is defined as a ratio between the Reference Signal Received Power (RSRP) and the Reference Signal Strength Indicator (RSSI). The RSSI comprises received wide band power, including thermal noise and noise generated in the receiver of the wireless device 300a, 30b, 300c. According to an embodiment the quality measure is the Signal to Interference and Noise ratio (SINR) for the MBMS bearer. According to an embodiment the quality measure is a combination of RSRQ and SINR.

The reference signal could be transmitted on an MBMS bearer with or without data being broadcasted on the MBMS bearer when the reference is transmitted. Hence, according to an embodiment the reference signal is transmitted on a data-less MBMS bearer.

Reference is now made to Fig. 3 illustrating methods for quality evaluation of an MBMS bearer as performed by the wireless device 300a, 300b, 300c according to further embodiments. It is assumed that steps S106 and S110 are performed as described above and a thus repeated description thereof is therefore omitted. Parallel reference is continued to the signalling diagram of Fig. 4.

There could be different steps, or operations, preceding the determination of the measurement in step S106. According to some aspects the MBMS bearer is activated. Hence, according to an embodiment the wireless device 300a, 300b, 300c is configured to perform step S102 before performing step S106:
S102: The wireless device 300a, 300b, 300c receives system information from the at least one radio access network node 110a. The system information indicates that the MBMS bearer is active.

According to some aspects each radio access network node 110a, 110b broadcasts system information and control information about the MBMS bearer. Hence, according to an embodiment the wireless device 300a, 300b, 300c is configured to perform step S104 after step S102 and before performing step S106:
S104: The wireless device 300a, 300b, 300c receives control information about the MBMS bearer from the at least one radio access network node 110a, 110b. The control information comprises the MCS.

As disclosed above, in step S106 the wireless device 300a, 300b, 300c determines a measurement of signal quality of a reference signal received from the at least one radio access network node 110a, 110b to obtain the quality measure for the MBMS bearer. In this respect the wireless device 300a, 300b, 300c could measure an MBSFN reference signal to determine the MBSFN RSRQ. Hence, according to an embodiment the reference signal is an MBSFN reference signal, and the MBSFN reference signal is by the wireless device 300a, 300b, 300c used to determine an MBSFN RSRQ from which the BLER of the MBMS bearer is estimated. The MBSFN reference signal can by the wireless device 300a, 300b, 300c be used to determine the MBSFN Reference Signal Received Power (RSRP) and MBSFN RSRQ. The MBSFN RSRQ is defined in 3GPP TS 36.214 v13.1.0. Since the MBSFN reference signal may be synchronized from several cells (e.g. from several radio access network nodes 110a, 110b), the MBSFN reference signal is always at least as strong as cell specific reference signals (CSRSs), and typically stronger when combining multiple sources of the MBSFN reference signal. The cell specific reference signal is defined in 3GPP TS 36.211 v13.1.0. For one MBMS bearer in one MBSFN the MCS is static and hence the wireless device 300a, 300b, 300c could therefore measure the MBSFN reference signal to determine the MBSFN RSRQ and thus obtain the quality measure for the MBMS bearer.

For an MBMS bearer using the SC-PTM transmission mode, the wireless device 300a, 300b, 300c may use the CSRSs to determine an equivalent RSRQ for the MBMS bearer. However, even if this reference signal is the same as the one used for unicast transmission, it does not indicate the same channel quality since the SC-PTM transmission mode e.g., lacks link adaptation and hybrid automatic repeat request (HARQ) retransmissions. Hence, according to an embodiment the reference signal is a CSRS, and the CSRS is by the wireless device 300a, 300b, 300c used to determine the quality measure for the MBMS bearer. The CSRS can by the wireless device 300a, 300b, 300c be used to determine RSRP and combined with RSSI determine the RSRQ.

According to some aspects the expected BLER is estimated also from the speed at which the wireless device 300a, 300b, 300c is moving. Hence, according to an embodiment the wireless device 300a, 300b, 300c is configured to perform step S108:
S108: The wireless device 300a, 300b, 300c estimates the speed at which the wireless device 300a, 300b, 300c is moving. The expected BLER is in step S110 then estimated also from the speed and/or Doppler effect resulting from movement of the wireless device 300a, 300b, 300c.

The movement of the wireless device 300a, 300b, 300c gives rise to a Doppler effect. As the skilled person understands, the Doppler effect can be determined using the carrier frequency of the bearer based on which the quality measure is estimated, the speed the wireless device 300a, 300b, 300c is travelling with, and the travelling direction of the wireless device 300a, 300b, 300c relative to the signal source (i.e., at least one radio access network node 110a, 110b). The worst case scenario occurs when the wireless device 300a, 300b, 300c is travelling in radial direction relative the strongest signal source or sources. If the direction relative to the signal source cannot be computed, the wireless device 300a, 300b, 300c could be conservative and in an embodiment assume said radial direction. The speed could be determined using e.g., measurements from a Global Positioning System. In general terms, a relative high Doppler effect requires a higher quality measure to reach the same BLER target at the same MCS level in comparison to a relative low Doppler effect.

The expected BLER can be compared with alternative transmission options for the data transmitted on the MBMS bearer, for example for the purpose of reporting and/or mobility decisions. Hence, according to an embodiment the wireless device 300a, 300b, 300c is configured to perform step S112:
S112: The wireless device 300a, 300b, 300c compares the expected BLER with a quality measurement of at least one additional bearer.

It can therefore be assumed that the wireless device 300a, 300b, 300c obtains the quality measurement of at least one potential or existing additional bearer in order to perform such a comparison. There are different examples of such additional bearer or bearers. For example, the additional bearer or bearers could be active in selected or neighboring target cells/areas for the service current provided by the MBMS bearer for which the expected BLER is estimated. According to an embodiment, each of the at least one additional bearer is a unicast bearer, another MBMS bearer, or a bearer for relay transmission. This so-called another MBMS bearer can be using either SC-PTM or MBSFN transmission mode. One example of a bearer for relay transmission is a bearer for UE-to-Network relay transmission. In this respect, according to some aspects the comparison of different bearer types, as might be performed in step S112, can be performed on payload level. The payload quality can be improved on an MBMS bearer with help of application level Forward Error Correction (FEC). The payload quality can be improved on a unicast bearer with the help of HARQ. In one embodiment there is a known target HARQ level that is used to map the BLER to a payload level loss ratio. As an example, one type of payload is media frames. If the media frames are transmitted using a constant bit rate and the frame size of the media frames is known, then a mapping between BLER and payload quality can be made. Also for UE-to-Network relay transmission the possibility to correct lost blocks can be considered.

According to some aspects the wireless device 300a, 300b, 300c reports the result of the MBMS bearer measurement, the result of the target measurements (i.e., the result of the quality measurement of the at least one additional bearer), and/or the result of the comparison to the control node 200. Hence, according to an embodiment the wireless device 300a, 300b, 300c is configured to perform step S114:
S114: The wireless device 300a, 300b, 300c sends a report comprising the expected BLER and the quality measurement to the control node 200 of the MBMS bearer.

If the MBMS bearer has poor quality but any of the discovered target options have even poorer quality this can be indicated in the report. Hence, according to an embodiment the report indicates that the expected BLER is above a first threshold. Further, according to an embodiment the report indicates an expected BLER of the at least one additional bearer.

If the expected BLER is below a defined threshold, steps S112 and S114 may be skipped. Hence, according to an embodiment, the comparing in step S112 and the sending in step S114 are only performed when the expected BLER of the MBMS bearer is above a second threshold.

The wireless device 300a, 300b, 300c could store a data structure comprising a relation between values of the quality measure, MCSs and BLERs. The relation, and hence also the data structure, could further comprise values of speed or resulting Doppler effect of the wireless device 300a, 300b, 300c. Hence, the expected BLER could be estimated by a table look-up, using the quality measure for the MBMS bearer and the currently used MCS (and optionally the estimated speed of the wireless device 300a, 300b, 300c) as input, producing the expected BLER as output.

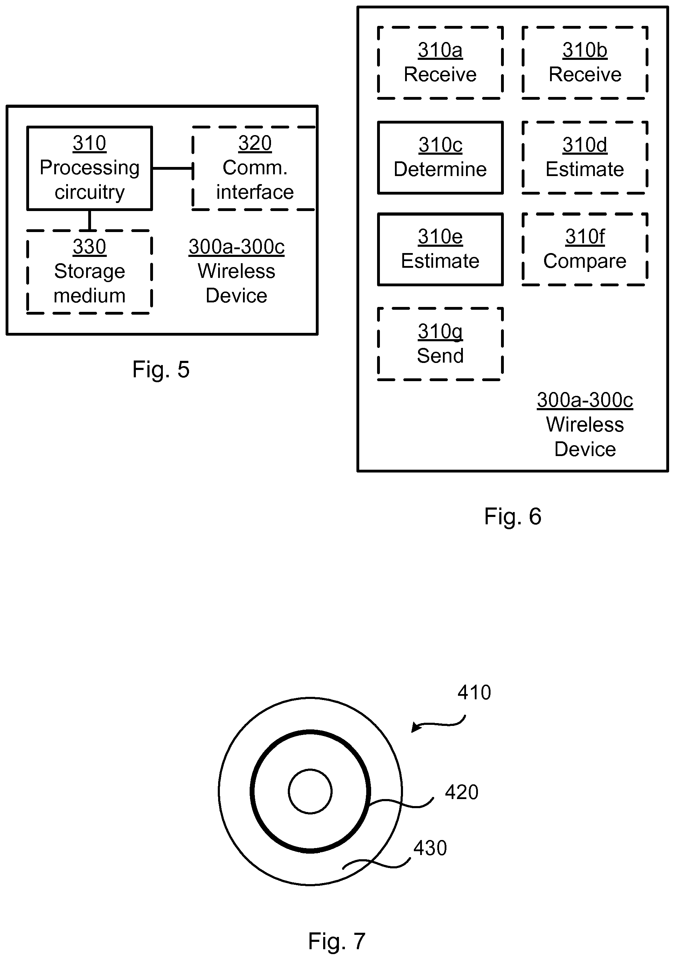

Fig. 5 schematically illustrates, in terms of a number of functional units, the components of a wireless device 300a, 300b, 300c according to an embodiment. Processing circuitry 310 is provided using any combination of one or more of a suitable central processing unit (CPU), multiprocessor, microcontroller, digital signal processor (DSP), etc., capable of executing software instructions stored in a computer program product 410 (as in Fig. 7), e.g. in the form of a storage medium 330. The processing circuitry 310 may further be provided as at least one application specific integrated circuit (ASIC), or field programmable gate array (FPGA).

Particularly, the processing circuitry 310 is configured to cause the wireless device 300a, 300b, 300c to perform a set of operations, or steps, S102-S114, as disclosed above. For example, the storage medium 330 may store the set of operations, and the processing circuitry 310 may be configured to retrieve the set of operations from the storage medium 330 to cause the wireless device 300a, 300b, 300c to perform the set of operations. The set of operations may be provided as a set of executable instructions.

Thus the processing circuitry 310 is thereby arranged to execute methods as herein disclosed. The storage medium 330 may also comprise persistent storage, which, for example, can be any single one or combination of magnetic memory, optical memory, solid state memory or even remotely mounted memory. The wireless device 300a, 300b, 300c may further comprise a communications interface 320 at least configured for communications at least with a radio access network node 110a, 110b and a control node 200. As such the communications interface 320 may comprise one or more transmitters and receivers, comprising analogue and digital components. The processing circuitry 310 controls the general operation of the wireless device 300a, 300b, 300c e.g. by sending data and control signals to the communications interface 320 and the storage medium 330, by receiving data and reports from the communications interface 320, and by retrieving data and instructions from the storage medium 330. Other components, as well as the related functionality, of the wireless device 300a, 300b, 300c are omitted in order not to obscure the concepts presented herein.

Fig. 6 schematically illustrates, in terms of a number of functional modules, the components of a wireless device 300a, 300b, 300c according to an embodiment. The wireless device 300a, 300b, 300c of Fig. 6 comprises a number of functional modules; a determine module 310c configured to perform step S106, and an estimate module 310e configured to perform step S110. The wireless device 300a, 300b, 300c of Fig. 6 may further comprises a number of optional functional modules, such as any of a receive module 310a configured to perform step S102, a receive module 210b configured to perform step S104, an estimate module 310d configured to perform step S108, a compare module 310f configured to perform step S112, and a send module 310g configured to perform step S114.

In general terms, each functional module 310a-310g may in one embodiment be implemented only in hardware or and in another embodiment with the help of software, i.e., the latter embodiment having computer program instructions stored on the storage medium 330 which when run on the processing circuitry makes the wireless device 300a, 300b, 300c perform the corresponding steps mentioned above in conjunction with Fig 6. It should also be mentioned that even though the modules correspond to parts of a computer program, they do not need to be separate modules therein, but the way in which they are implemented in software is dependent on the programming language used. Preferably, one or more or all functional modules 310a-310g may be implemented by the processing circuitry 310, possibly in cooperation with functional units 320 and/or 330. The processing circuitry 310 may thus be configured to from the storage medium 330 fetch instructions as provided by a functional module 310a-310g and to execute these instructions, thereby performing any steps as disclosed herein.

Fig. 7 shows one example of a computer program product 410 comprising computer readable storage medium 430. On this computer readable storage medium 430, a computer program 420 can be stored, which computer program 420 can cause the processing circuitry 310 and thereto operatively coupled entities and devices, such as the communications interface 320 and the storage medium 330, to execute methods according to embodiments described herein. The computer program 420 and/or computer program product 410 may thus provide means for performing any steps as herein disclosed.

In the example of Fig. 7, the computer program product 410 is illustrated as an optical disc, such as a CD (compact disc) or a DVD (digital versatile disc) or a Blu-Ray disc. The computer program product 410 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 420 is here schematically shown as a track on the depicted optical disk, the computer program 420 can be stored in any way which is suitable for the computer program product 410.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for quality evaluation of a Multimedia Broadcast Multicast Services, MBMS, bearer, the method being performed by a wireless device (300a, 300b, 300c), the method comprising:
determining (S106) a measurement of signal quality of a reference signal separate from the MBMS bearer, the reference signal being received from at least one radio access network node (110a, 110b), to obtain a quality measure for the MBMS bearer; and
estimating (S110) an expected block error rate, BLER, of the MBMS bearer from the measurement and from a modulation and coding scheme, MCS, used for a Multicast Channel, MCH, of the MBMS bearer.

2. The method according to claim 1, wherein the quality measure is at least one of Reference Signal Received Quality, RSRQ, or Signal to Interference and Noise Ratio, SINR, for the MBMS bearer.

3. The method according to claim 1, wherein the BLER is estimated as if data were sent on the MBMS bearer.

4. The method according to claim 1, wherein the reference signal is transmitted on a data-less MBMS bearer.

5. The method according to claim 1, wherein the reference signal is an MBMS Single Frequency Network, MBSFN, reference signal, and wherein the MBSFN reference signal is by the wireless device used to determine an MBSFN RSRQ from which the BLER of the MBMS bearer is estimated.

6. The method according to claim 1, wherein the reference signal is a cell specific reference signal, CSRS, and wherein the CSRS is by the wireless device used to determine the quality measure for the MBMS bearer.

7. The method according to claim 1, further comprising:
estimating (S108) a speed at which the wireless device is moving, and wherein the expected BLER is estimated also from the speed or Doppler effect resulting from movement of the wireless device.

8. The method according to claim 1, further comprising:
comparing (S112) the expected BLER with a quality measurement of at least one potential or existing additional bearer.

9. The method according to claim 8, wherein each of the at least one additional bearer is a unicast bearer, another MBMS bearer, or a bearer for relay transmission.

10. The method according to claim 9, wherein said another MBMS bearer uses MBMS Single Frequency Network, MBSFN, transmission mode or Single Cell Point to Multipoint, SC-PTM, transmission mode.

11. The method according to claim 8, 9, or 10, further comprising:
sending (S114) a report comprising the expected BLER and the quality measurement to a control node (200) of the MBMS bearer.

12. The method according to claim 11, wherein the report indicates that the expected BLER is above a first threshold.

13. The method according to claim 11 or 12, wherein the report indicates an expected BLER of the at least one additional bearer.

14. The method according to claim 11, 12, or 13, wherein said sending only is performed when the expected BLER of the MBMS bearer is above a second threshold.

15. The method according to claim 1, further comprising:
receiving (S102) system information indicating activation of the MBMS bearer by a control node (200) from the at least one radio access network node.

16. The method according to claim 15, further comprising:
receiving (S104) control information about the MBMS bearer from the at least one radio access network node, wherein the control information comprises the MCS.

17. A wireless device (300a, 300b, 300c) for quality evaluation of a Multimedia Broadcast Multicast Services, MBMS, bearer, the wireless device (300a, 300b, 300c) comprising:
a determine module (310c) configured to determine a measurement of signal quality of a reference signal separate from the MBMS bearer, the reference signal being received from at least one radio access network node (110 a, 110b) to obtain a quality measure for the MBMS bearer; and
an estimate module (310e) configured to estimate an expected block error rate, BLER, of the MBMS bearer from the measurement and from a modulation and coding scheme, MCS, used for a Multicast Channel, MCH, of the MBMS bearer.

18. A computer program (420) for quality evaluation of a Multimedia Broadcast Multicast Services, MBMS, bearer, the computer program comprising computer code which, when run on processing circuitry (310) of a wireless device (300a, 300b, 300c), causes the wireless device (300a, 300b, 300c) to:
determine (S106) a measurement of signal quality of a reference signal separate from the MBMS bearer, the reference signal being received from at least one radio access network node (110 a, 110b), to obtain a quality measure for the MBMS bearer; and
estimate (S110) an expected block error rate, BLER, of the MBMS bearer from the measurement and from a modulation and coding scheme, MCS, used for a Multicast Channel, MCH, of the MBMS bearer.

19. A computer program product (410) comprising a computer program (420) according to claim 18, and a computer readable storage medium (430) on which the computer program is stored.

## Patentansprüche

1. Verfahren zur Qualitätsbewertung eines Multimedia Broadcast Multicast Services-Trägers, MBMS-Trägers, wobei das Verfahren von einer drahtlosen Vorrichtung (300a, 300b, 300c) durchgeführt wird, wobei das Verfahren umfasst:
Bestimmen (S106) einer Messung der Signalqualität eines von dem MBMS-Träger getrennten Referenzsignals, wobei das Referenzsignal von mindestens einem Funkzugangsnetzknoten (110a, 110b) empfangen wird, um ein Qualitätsmaß für den MBMS-Träger zu erhalten; und
Schätzen (S110) einer erwarteten Blockfehlerrate, BLER, des MBMS-Trägers aus der Messung und aus einem Modulations- und Codierungsschema, MCS, das für einen Multicast-Kanal, MCH, des MBMS-Trägers verwendet wird.

2. Verfahren nach Anspruch 1, wobei das Qualitätsmaß mindestens eines aus einer Referenzsignalempfangsqualität, RSRQ oder einem Signal-Interferenz-Rausch-Verhältnis, SINR, für den MBMS-Träger ist.

3. Verfahren nach Anspruch 1, wobei die BLER geschätzt wird, als ob Daten auf dem MBMS-Träger gesendet würden.

4. Verfahren nach Anspruch 1, wobei das Referenzsignal auf einem datenlosen MBMS-Träger übertragen wird.

5. Verfahren nach Anspruch 1, wobei das Referenzsignal ein MBMS-Einzelfrequenznetzwerk-Referenzsignal, MBSFN-Referenzsignal, ist, und wobei das MBSFN-Referenzsignal von der drahtlosen Vorrichtung verwendet wird, um eine MBSFN-RSRQ zu bestimmen, von der die BLER des MBMS-Trägers geschätzt wird.

6. Verfahren nach Anspruch 1, wobei das Referenzsignal ein zellspezifisches Referenzsignal, CSRS, ist und wobei das CSRS von der drahtlosen Vorrichtung verwendet wird, um das Qualitätsmaß für den MBMS-Träger zu bestimmen.

7. Verfahren nach Anspruch 1, ferner umfassend:
Schätzen (S108) einer Geschwindigkeit, mit der sich die drahtlose Vorrichtung bewegt, und wobei die erwartete BLER auch von der Geschwindigkeit oder dem Dopplereffekt, der sich aus der Bewegung der drahtlosen Vorrichtung ergibt, geschätzt wird.

8. Verfahren nach Anspruch 1, ferner umfassend:
Vergleichen (S112) der erwarteten BLER mit einer Qualitätsmessung von mindestens einem potenziellen oder existierenden zusätzlichen Träger.

9. Verfahren nach Anspruch 8, wobei jeder des mindestens einen zusätzlichen Trägers ein Unicast-Träger, ein anderer MBMS-Träger oder ein Träger zur Weiterleitungsübertragung ist.

10. Verfahren nach Anspruch 9, wobei der andere MBMS-Träger einen MBMS-Einzelfrequenznetzwerk-Übertragungsmodus, MBSFN-Übertragungsmodus, oder Einzelzellenpunkt-zu-Mehrfachpunkt-Übertragungsmodus, SC-PTM-Übertragungsmodus, verwendet.

11. Verfahren nach Anspruch 8, 9 oder 10, ferner umfassend:
Senden (S114) eines Berichts, der die erwartete BLER und die Qualitätsmessung umfasst, an einen Steuerknoten (200) des MBMS-Trägers.

12. Verfahren nach Anspruch 11, wobei der Bericht angibt, dass die erwartete BLER über einem ersten Schwellenwert liegt.

13. Verfahren nach Anspruch 11 oder 12, wobei der Bericht eine erwartete BLER des mindestens einen zusätzlichen Trägers angibt.

14. Verfahren nach Anspruch 11, 12 oder 13, wobei das Senden nur durchgeführt wird, wenn die erwartete BLER des MBMS-Trägers über einem zweiten Schwellenwert liegt.

15. Verfahren nach Anspruch 1, ferner umfassend:
Empfangen (S102) von Systeminformationen, die eine Aktivierung des MBMS-Trägers angeben, durch einen Steuerknoten (200) von dem mindestens einen Funkzugangsnetzknoten.

16. Verfahren nach Anspruch 15, ferner umfassend:
Empfangen (S104) von Steuerinformationen über den MBMS-Träger von dem mindestens einen Funkzugangsnetzknoten, wobei die Steuerinformation das MCS umfasst.

17. Drahtlose Vorrichtung (300a, 300b, 300c) zur Qualitätsbewertung eines Multimedia Broadcast Multicast Services-Trägers, MBMS-Trägers, wobei die drahtlose Vorrichtung (300a, 300b, 300c) umfasst:
ein Bestimmungsmodul (310c), das konfiguriert ist zum Bestimmen einer Messung der Signalqualität eines von dem MBMS-Träger getrennten Referenzsignals, wobei das Referenzsignal von mindestens einem Funkzugangsnetzknoten (110a, 110b) empfangen wird, um ein Qualitätsmaß für den MBMS-Träger zu erhalten; und
ein Schätzmodul (310e), das konfiguriert ist zum Schätzen einer erwarteten Blockfehlerrate, BLER, des MBMS-Trägers aus der Messung und aus einem Modulations- und Codierungsschema, MCS, das für einen Multicast-Kanal, MCH, des MBMS-Trägers verwendet wird.

18. Computerprogramm (420) zur Qualitätsbewertung eines Multimedia Broadcast Multicast Services-Trägers, MBMS-Trägers, wobei das Computerprogramm Computercode umfasst, der, wenn er auf Verarbeitungsschaltlogik (310) einer drahtlosen Vorrichtung (300a, 300b, 300c) ausgeführt wird, die drahtlose Vorrichtung (300a, 300b, 300c) veranlasst zum:
Bestimmen (S106) einer Messung der Signalqualität eines von dem MBMS-Träger getrennten Referenzsignals, wobei das Referenzsignal von mindestens einem Funkzugangsnetzknoten (110a, 110b) empfangen wird, um ein Qualitätsmaß für den MBMS-Träger zu erhalten; und
Schätzen (S110) einer erwarteten Blockfehlerrate, BLER, des MBMS-Trägers aus der Messung und aus einem Modulations- und Codierungsschema, MCS, das für einen Multicast-Kanal, MCH, des MBMS-Trägers verwendet wird.

19. Computerprogrammprodukt (410), das ein Computerprogramm (420) nach Anspruch 18 und ein computerlesbares Speichermedium (430), auf dem das Computerprogramm gespeichert ist, umfasst.

## Revendications

1. Procédé d'évaluation de qualité d'une porteuse de services de diffusion et multidiffusion multimédia, MBMS, le procédé étant mis en œuvre par un dispositif sans fil (300a, 300b, 300c), le procédé comprenant :
la détermination (S106) d'une mesure de qualité de signal d'un signal de référence distinct de la porteuse MBMS, le signal de référence étant reçu depuis au moins un nœud de réseau d'accès radio (110a, 110b), pour obtenir une mesure de qualité pour la porteuse MBMS ; et
l'estimation (S110) d'un taux d'erreur de bloc, BLER, attendu de la porteuse MBMS à partir de la mesure et à partir d'un schéma de modulation et de codage, MCS, utilisé pour un canal de multidiffusion, MCH, de la porteuse MBMS.

2. Procédé selon la revendication 1, dans lequel la mesure de qualité est au moins l'un parmi une qualité reçue de signal de référence, RSRQ, ou un rapport signal-bruit plus interférence, SINR, pour la porteuse MBMS.

3. Procédé selon la revendication 1, dans lequel le BLER est estimé comme si les données avaient été envoyées sur la porteuse MBMS.

4. Procédé selon la revendication 1, dans lequel le signal de référence est transmis sur une porteuse MBMS sans données.

5. Procédé selon la revendication 1, dans lequel le signal de référence est un signal de référence de réseau à fréquence unique MBMS, MBSFN, et dans lequel le signal de référence MBSFN est utilisé par le dispositif sans fil pour déterminer une RSRQ MBSFN à partir de laquelle le BLER de la porteuse MBMS est estimé.

6. Procédé selon la revendication 1, dans lequel le signal de référence est un signal de référence spécifique à la cellule, CSRS, et dans lequel le CSRS est utilisé par le dispositif sans fil pour déterminer la mesure de qualité pour la porteuse MBMS.

7. Procédé selon la revendication 1, comprenant en outre :
l'estimation (S108) d'une vitesse à laquelle le dispositif sans fil se déplace, et dans lequel le BLER attendu est estimé également à partir de la vitesse ou de l'effet doppler résultant d'un mouvement du dispositif sans fil.

8. Procédé selon la revendication 1, comprenant en outre :
la comparaison (S112) du BLER attendu à une mesure de qualité d'au moins une porteuse supplémentaire potentielle ou existante.

9. Procédé selon la revendication 8, dans lequel chacune parmi l'au moins une porteuse supplémentaire est une porteuse de monodiffusion, une autre porteuse MBMS, ou une porteuse pour une transmission relais.

10. Procédé selon la revendication 9, dans lequel ladite autre porteuse MBMS utilise un mode de transmission de réseau à fréquence unique MBMS, MBSFN, ou un mode de transmission point à multipoint de cellule unique, SC-PTM.

11. Procédé selon la revendication 8, 9 ou 10, comprenant en outre :
l'envoi (S114) d'un rapport comprenant le BLER attendu et la mesure de qualité à un nœud de commande (200) de la porteuse MBMS.

12. Procédé selon la revendication 11, dans lequel le rapport indique que le BLER attendu est au-dessus d'un premier seuil.

13. Procédé selon la revendication 11 ou 12, dans lequel le rapport indique un BLER attendu de l'au moins une porteuse supplémentaire.

14. Procédé selon la revendication 11, 12 ou 13, dans lequel ledit envoi est uniquement mis en œuvre lorsque le BLER attendu de la porteuse MBMS est au-dessus d'un deuxième seuil.

15. Procédé selon la revendication 1, comprenant en outre :
la réception (S102) d'informations système indiquant l'activation de la porteuse MBMS par un nœud de commande (200) à partir de l'au moins un nœud de réseau d'accès radio.

16. Procédé selon la revendication 15, comprenant en outre :
la réception (S104) d'informations de commande concernant la porteuse MBMS depuis l'au moins un nœud de réseau d'accès radio, dans lequel les informations de commande comprennent le MCS.

17. Dispositif sans fil (300a, 300b, 300c) pour l'évaluation de qualité d'une porteuse de services de diffusion et multidiffusion multimédia, MBMS, le dispositif sans fil (300a, 300b, 300c) comprenant :
un module de détermination (310c) configuré pour déterminer une mesure de qualité de signal d'un signal de référence distinct de la porteuse MBMS, le signal de référence étant reçu depuis au moins un nœud de réseau d'accès radio (110a, 110b), pour obtenir une mesure de qualité pour la porteuse MBMS ; et
un module d'estimation (310e) configuré pour estimer un taux d'erreur de bloc, BLER, attendu de la porteuse MBMS à partir de la mesure et à partir d'un schéma de modulation et de codage, MCS, utilisé pour un canal de multidiffusion, MCH, de la porteuse MBMS.

18. Programme informatique (420) pour l'évaluation de qualité d'une porteuse de services de diffusion et multidiffusion multimédia, MBMS, le programme informatique comprenant un code informatique qui, lorsqu'il est exécuté sur un circuit de traitement (310) d'un dispositif sans fil (300a, 300b, 300c), amène le dispositif sans fil (300a, 300b, 300c) à :
déterminer (S106) une mesure de qualité de signal d'un signal de référence distinct de la porteuse MBMS, le signal de référence étant reçu depuis au moins un nœud de réseau d'accès radio (110a, 110b), pour obtenir une mesure de qualité pour la porteuse MBMS ; et
estimer (S110) un taux d'erreur de bloc, BLER, attendu de la porteuse MBMS à partir de la mesure et à partir d'un schéma de modulation et de codage, MCS, utilisé pour un canal de multidiffusion, MCH, de la porteuse MBMS.

19. Produit programme informatique (410) comprenant un programme informatique (420) selon la revendication 18, et un support de stockage lisible par ordinateur (430) sur lequel le programme informatique est stocké.
